# EUROPEAN PATENT SPECIFICATION

(11) **EP 3 028 574 B1**
(45) Date of publication and mention of the grant of the patent: **30.05.2018**
(21) Application number: 14195968.4
(22) Date of filing: 02.12.2014
(51) Int. Cl.: A01N 59/00, A01N 59/04, F25D 3/10, A23B 7/04, A01G 7/02

(54) **Method for removing a flower of a plant**
Verfahren zum Entfernen einer Blume von einer Pflanze
Procédé pour retirer une fleur d'une plante

(43) Date of publication of application: 08.06.2016
(73) Proprietor: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Inventor: Otto, Wolfgang, 39175 Gerwisch (DE)
(74) Representative: KNH Patentanwälte Neumann Heine Taruttis PartG mbB

(56) References cited:
- US-A- 3 815 377
- US-A- 5 921 091
- US-A1- 2001 039 246
- US-A1- 2005 245 396
- GEORGE OUMA: "Fruit thinning with specific reference to citrus species : A review", AGRICULTURE AND BIOLOGY JOURNAL OF NORTH AMERICA, vol. 3, no. 4, 1 April 2012 (2012-04-01), pages 175-191, XP055184055, ISSN: 2151-7517, DOI: 10.5251/abjna.2012.3.4.175.191

## Description

The present invention relates to a method for removing at least one flower of a plant. In particular, the present invention relates to the technical field of fruit growing and is preferably used for removing at least one flower of a strawberry plant.

For some plants it is known to remove the flowers by hand in the first year of planting. For example, strawberries are planted in April and bloom in May. Currently, in the year of planting the flowers are removed by hand. Thus, the plants develop no fruits in the first year. Instead, the grow of the plants is increased to generate higher vitality of the plant and higher harvests in the following years. Nevertheless, thinning or removing the flowers by hand leads to high labor expenses.

Further it is known e. g. from DE 693 24 250 T2, WO 2013/174993 A1, US 2001/0039246 A1 or US 2005/0245396 A1 to apply a chemical compound on the flowers (blossoms) thin the fruits. Fruit thinning is necessary since many fruit trees produce too many blossoms each year. Chemical fruit thinning is usually effective and leads to lower personnel costs, but the chemical compounds used can be the source of environmental contaminations or pollution.

Therefore, it is an object of the present invention to at least partially solve the problems known with regard to the prior art. In particular, it is sought to provide a method to effectively remove a flower of a plant without potential hazard for the environment and without generating high personnel expenses.

Said objects are achieved by means of a method according to the features of the independent claims. The dependent claims specify further advanta geous embodiments of the invention. It should be noted that the individual features specified in the claims may be combined with one another in any desired technological reasonable manner and form further embodiments of the invention. The specification, in particular in connection with the figures, explains the invention further and specifies particularly preferred embodiments of the invention.

In particular, the objects are achieved by a method for removing at least one flower of a plant, wherein the flower is exposed to a cold atmosphere with a temperature below a pre-determined treatment temperature for at least a pre-determined treatment time.

Therefore, it can be understood that the invention is based on the idea to use the sensitivity of the flowers to low temperatures to remove them e. g. in the year of planting. In this context, "removing" means to damage a flower to prevent the flower from developing to a fruit. In other words, the flower gets at least partially surrounded with a cold atmosphere having a pre-determined temperature for a pre-determined treatment time. This uses an effect known from fruit trees or plants which are sensitive for night frosts. Therefore, the method according to the present invention uses physical means instead of chemical agents to remove the flower. It is to be understood that the term "removing" as used within this document does not necessary imply the flower dropping of the plant.

A cold atmosphere may be described as an environment with a temperature below a pre-determined treatment temperature. Thus, the pre-determined treatment temperature can be understood as a maximum temperature which is still capable to damage a flower. It is preferred that the pre-determined treatment temperature is in the range of or below the freezing point. It is further preferred that the pre-determined treatment temperature is zero degree Celsius (Centigrade). The pre-determined treatment temperature is determined in particular depending on the kind of plant, the size of the flower and/or the mass of the flower. Preferably, the temperature is above a predetermined minimum temperature which depends e. g. on the kind of plant. Preferably, the temperature is controlled in such a manner that the temperature at the flower or in a region within a distance of about 1 cm [centimeter] of the flower is equal to the treatment temperature or at most 2° C [degree centigrade]. The term cold atmosphere is in particular to be understood in such a manner that a cold gas is applied into the vicinity of the flower, e. g. by applying a cryogenic agent like a cryogenic fluid or cryogenic gas into the vicinity of the flower.

The pre-determined treatment time can be understood as the time which is necessary to effectively damage at least one flower when it is brought into contact with the cold atmosphere with a temperature close to the pre-determined treatment temperature. The pre-determined treatment time depends preferably on the kind of plant, the size of the flower and/or the mass of the flower.

Preferably, the cold atmosphere is provided in an at least partially confined treatment space.

It is preferred that the treatment space is confined by a cover which is open on one side. In use this open side can be directed towards the soil in which the plant is planted. The cover has an inner surface being in use directed to the plant and an outer surface being the opposite side to the inner side. The cover is preferably in the shape of a cube or a cowling. It is further preferred that the cover has an inlet opening. This inlet opening can be connectable to a delivery line for a cryogenic agent like a cryogenic fluid or a cryogenic gas and it can be connectable to at least one discharging means.

According to a preferred embodiment the cold atmosphere is generated using at least one cryogenic gas.

A cryogenic gas can be discharged inside the at least partially confined treatment space. The cryogenic gas can cool down the atmosphere present inside the treatment space. The amount of cryogenic gas may be much smaller than the volume of air confined by the treatment space.

According to a further preferred embodiment the cold atmosphere is generated by injecting a cryogenic fluid into the treatment space.

A cryogenic fluid is a cryogenic liquid and/or a cryogenic gas. Furthermore, "injecting" is preferably to be understood as discharging with at least a predetermined pressure, in particular in and/or upstream of the nozzle. Further, injecting is preferably to be understood as discharging the fluid into the treatment space having a pre-determined spray cone and/or spray pattern.
According to a further improvement the cryogenic fluid is indirectly injected into the treatment space without direct contact with the flower.

E. g. the cryogenic fluid is injected into the treatment space in a pre-determined direction while this direction is not oriented to a flower but e. g. to the top of the cover of the confined treatment space. The pre-determined direction can be at least one direction, for example at least one direction along or parallel to the inner surface of the cover of the treatment space. "Indirectly injected" can also mean that the cryogenic fluid is injected against a deflector covering the flowers or plants from the direct contact with the cryogenic fluid. Such a deflector is preferably mounted inside the treatment space. Alternatively or cumulatively at least a part of the inner surface of the cover of the treatment space can be used as a deflector.

According to yet another embodiment of the invention the cryogenic fluid comprises at least one of the following: liquid nitrogen and carbon dioxide.

According to a further embodiment the cold atmosphere is generated using solid carbon dioxide.

The solid carbon dioxide is preferably introduced into the at least partially confined treatment space. Alternatively or cumulatively, the solid carbon dioxide to be introduced into the treatment space can also be generated outside the at least partially confined treatment space e. g. by providing a solid block of carbon dioxide, which is treated with cutting means or by creating carbon dioxide snow by the expansion of high pressure liquid carbon dioxide and subsequently discharged into the treatment space. Alternatively, the solid carbon dioxide can sublimate outside the treatment space whereas the respective cold carbon dioxide gas can be introduced into the treatment space subsequently.

Furthermore, a device for removing at least one flower of a plant is described herewithin, wherein the device comprises an at least partially confined treatment space, fillable with a cold atmosphere with a temperature below a pre-determined treatment temperature, and at least one discharging means for discharging a cryogenic agent into the treatment space.

Preferably, the device is adapted to perform the above described method for removing at least one flower of a plant. A cryogenic agent is preferably at least one of the following: a cryogenic fluid, a cryogenic gas, a solidified gas and a gas with a temperature of less than -150°C. Preferred cryogenic agents are nitrogen, carbon dioxide, oxygen, argon, helium and mixtures of at least two of the aforementioned substances. A discharging means is preferably a cone, an orifice, a duct, an injector, a spray valve, an injector, a nozzle or the like.

According to a further aspect the at least one discharging means comprises at least one nozzle for discharging at least of the following: a cryogenic gas and a cryogenic fluid.

The nozzle is preferably adjustable to discharge a cryogenic gas or a fluid in a pre-determined direction, a pre-determined cross section and/or with a predetermined velocity profile of the cryogenic agent after leaving the nozzle.

The nozzle is preferably connectable to a delivery line for a cryogenic gas or fluid. The delivery line can be arranged outside the at least partially confined treatment space. The treatment space has preferably an open side, preferably an open downside and can be confined by a cover having an inner surface and an outer surface. The cover may also have an inlet opening, through which the nozzle can protrude at least partially inside the treatment space.

According to a further aspect the at least one nozzle protrudes at least partially into the treatment space.

Preferably, the treatment space is at least partially fillable with at least one cryogenic gas. Therefore, the cryogenic gas can be injected or discharged using the nozzle. This discharging may take place with a specific amount of pressure used for injecting the cryogenic gas inside the treatment space in a pre-determined direction. However, the cryogenic gas can also be introduced slowly into the treatment space. Therefore, it can be provided in a duct. The cryogenic gas is preferably delivered to the duct by a delivery line. Preferably, the delivery line has a discharging means at one end. The duct is preferably connectable or connected to the cover confining the treatment space. At least one orifice is preferably arranged in the cover, in particular protruding from the outer surface to the inner surface of the cover at the position where the duct is connectable or connected to the cover. Therefore, the cryogenic gas being stored in the duct can enter the treatment space through the at least one orifice.

It is preferred that the at least one nozzle is adapted for discharging a cryogenic fluid into the treatment space to provide a cold atmosphere. The at least one nozzle is preferably arranged at the end of the discharging means. Preferably, a distributor is used as a connection between at least one discharging means having several nozzles and a delivery line which delivery line is connected and/or connectable to a source for cryogenic gas or cryogenic fluid. Preferably, the nozzle is adjustable or adapted to expand liquid carbon dioxide to produce solid carbon dioxide.

According to a further aspect the at least one nozzle is arranged for indirectly discharging the cryogenic fluid into the treatment space for avoiding direct contact of the cryogenic fluid with the flower.

E. g. the nozzle can be aligned in a direction away from the at least one flower or the plant. Alternatively, the nozzle is arranged in a direction substantially parallel to at least a part of the inner surface of the cover and not in a direction directly towards the at least one flower or plant. If a plurality of nozzles is implemented in the device according to the invention, the nozzles do not have to be aligned in parallel.

Preferably, the term "Indirectly injected" is understood in such a manner that the cryogenic fluid is injected against a deflector. Therefore, a deflector can be additionally mounted inside the treatment space or at least a part of the inner surface of the cover of the treatment space can be used as a deflector. The term deflector is understood in particular to cover a wall, a panel or a sheet, preferably a metal sheet. When the deflector is mounted inside the treatment space, it can be arranged substantially parallel to at least a part of the inner surface of the cover.

When a flower is exposed to the cold atmosphere, it gets damaged by the low temperature. The supply of the flower by the plant is stopped. Usually, the flowers of a plant are more sensitive to cold than the plant (the stem, the branches etc.) itself. To avoid to damage beside the flower the plant itself the indirect injection has been found advantageous. Therefore, only the flower gets damaged by frost but the plant itself can survive and grow stronger. It is preferred that the cryogenic fluid comprises liquid nitrogen and/or carbon dioxide.

According to a further aspect the discharging means are adapted to provide a solid cryogenic agent into the treatment space.

The solid cryogenic agent is preferably solid carbon dioxide. The solid cryogenic agent is either delivered to the treatment space or is generated within the treatment space. The deliverance of the solid cryogenic agent covers in particular the introduction of carbon dioxide snow or particles of dry ice e. g. in the form of pellets. In this case the discharging means comprises preferably at least one conveyer like a conveyor belt or an auger. For the generation of carbon dioxide snow the discharging means comprises preferably a nozzle for expanding liquid carbon dioxide under high pressure into the treatment space.

According to a further aspect the discharging means are coupled to cutting means for cutting solid carbon dioxide.

If applying a solid cryogenic agent into the treatment space it is preferred to provide measures to ensure that the solid cryogenic agent is not in direct contact with the flower or the plant.

The device for removing at least one flower of a plant can be connectable to a motor vehicle. A motor vehicle is preferably an agricultural motor vehicle, for example a tractor, it is preferably a towing vehicle. The device can be directly connectable to the motor vehicle or it can be arranged on a trailer, which trailer can be connectable to the motor vehicle.

The device can be configured to be movably arranged in the vicinity of a plant. Preferable it is configured to be moved or pulled over at least one flower of a plant. The device may comprise a cowling in which liquid nitrogen or carbon dioxide can be discharged. The device can be pulled over a plant by the motor vehicle.

Advantages of the method according to the present invention are transferable and applicable to the device described in this document and vice versa.

Particularly preferred variants of the invention and also the technical field will now be explained in more detail on the basis of the figures. It should be noted that the exemplary embodiments shown in the figures are not intended to restrict the invention and are schematically shown in:
- Fig. 1:: a first example of device for removing at least one flower of a plant,
- Fig. 2:: a second example of such a device,
- Fig. 3:: a third example of such a device,
- Fig. 4:: a fourth example of such a device,
- Fig. 5:: an first example of such a device being coupled to a motor vehicle, and
- Fig. 6:: a second example of such a device coupled to a motor vehicle.

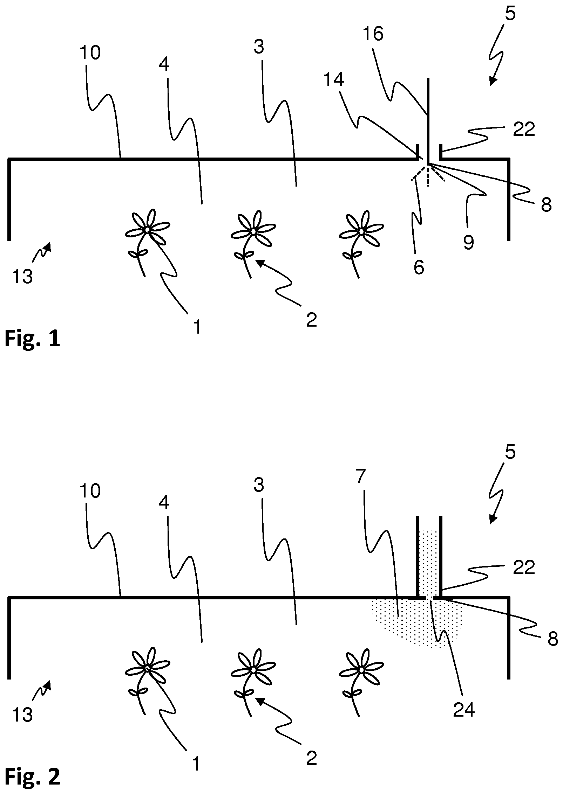

Fig. 1 displays schematically a first example of a device 5 for removing at least one flower of a plant. Three plants 2, each having at least one flower (blossom) 1, being arranged in an at least partially confined treatment space 4 are shown ex-amplewise. The treatment space 4 can be at least partially filled with a cold atmosphere 3. The at least one flower 1 is exposed to the cold atmosphere 3 which is provided in the at least partially confined treatment space 4. The treatment space 4 is at least partially confined by a cover 10. The treatment space 4 is not confined at the open side 13 of device 5. The cold atmosphere 3 is generated by injecting a cryogenic fluid 6 into the treatment space 4. The device 5 comprises a discharging means 8 for discharging the cryogenic fluid 6 inside the treatment space. In particular the discharging means 8 has a nozzle 9 for injecting the cryogenic fluid 6 into the treatment space 4. By providing the cryogenic fluid through the nozzle 9 a spray pattern of cryogenic fluid 6 is generated. The nozzle 9 protrudes at least partially into the treatment space 4, through the inlet opening 14 and the duct 22. The inlet opening 14 is provided in the cover 10 of device 5, where the duct 22 protrudes outside and away from the treatment space 4. Duct 22 and boundary 10 can be connected, preferably materially connected. The discharging means 8 having one nozzle 9 can be connected with a delivery line 16 to a source of cryogenic fluid 6. Together with or alternatively to the cryogenic fluid 6 a cryogenic gas can be injected into the treatment space 4 via the nozzle 6.

Fig. 2 displays schematically a second example of a device 5 for removing at least one flower 1 of a plant 2. Reference is made to the description of the first example above. Therefore, only the differences compared to the first example will be described in the following. The cold atmosphere 3 within the treatment space 4 is generated using at least one cryogenic gas 7. The at least one cryogenic gas 7 is delivered through the duct 22 into the treatment space 4.

The discharging means 8 in this example comprises at least one orifice 24 through which the cryogenic gas 7 is in use at least intermittently into the treatment space 4. The at least one orifice 24 is arranged in the cover 10 at the position of the connection of the duct 22 to the cover 10. Therefore, the cryogenic gas 7 being present in the duct 22 enters the treatment space 4 through the at least one orifice 24.

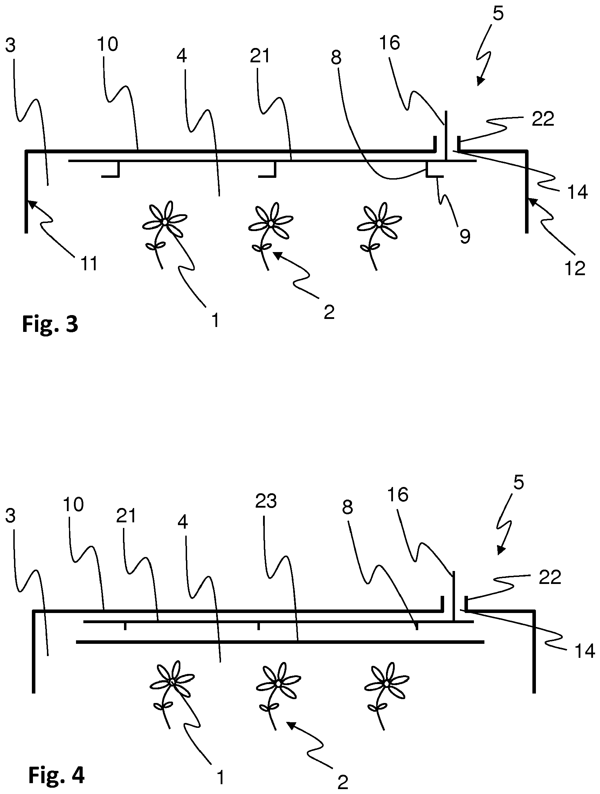

Fig. 3 displays schematically a third example of a device 5 for removing at least one flower of a plant. Reference is made to the description of the first example above. Therefore, only the differences compared to the first example will be described in the following. The at least one discharging means 8 in this example is arranged inside the treatment space 4 having nozzles 9 for discharging or injecting a cryogenic fluid 6 into the treatment space 4. In use through the nozzle 9 a cryogenic fluid 6 is introduced into the at least partially confined treatment space 4 to provide a cold atmosphere within.

The nozzle 9 is arranged for indirectly discharging or injecting the cryogenic fluid 6 into the treatment space 4 so that the cryogenic fluid 6 is not coming into direct contact with the flower 1 resulting in an indirect injection or introduction of the cryogenic fluid 6. In this example the nozzles 9 are oriented parallel to the inner surface 11 of the cover 10. The nozzle 9 can also be directed into different directions, in particular in the direction of the cover 10, e. g. towards the upper part of the cover 10.

Further, the discharging means 8 and nozzles 9 are connected to a distributor 21. The distributor 21 can be arranged inside the treatment space 4 and can be connected to a delivery line 16 for cryogenic fluid 6 and allows a predetermined distribution of the cryogenic liquid between the nozzles 9 to allow the generation of a predetermined temperature profile within the treatment space 4. The cryogenic fluid 6 can be liquid nitrogen and/or carbon dioxide.

Fig. 4 displays schematically a fourth example of a device 5 for removing at least one flower from a plant. Reference is made to the description of the first example above. Therefore, only the differences compared to the first example will be described in the following. This example comprises a deflector 23 being arranged inside the treatment space 4. The deflector 23 is in this example oriented substantially parallel to at least a part of the inner surface 11 of the cover 10. In use a cryogenic fluid 6, a cryogenic gas 7 and/or solid carbon dioxide 25 is discharged against the deflector 23 using at least one discharging means 8. The discharging means 8 comprises nozzles 9. The discharging means 8 or the nozzles 9 are in a further advantageous aspect adapted to expand liquid carbon dioxide under high pressure to generate solid carbon dioxide 25 in the form of carbon dioxide snow.

By use of the deflector 23 the at least one flower 1 is not coming into direct contact with the cryogenic fluid 6, the cryogenic gas 7 or the solid carbon dioxide 25. The cold atmosphere 3 inside the treatment space 4 can be generated and cooled using the cryogenic fluid 6, the cryogenic gas 7 or the solid carbon dioxide 25 by discharge of the same against the deflector 23.

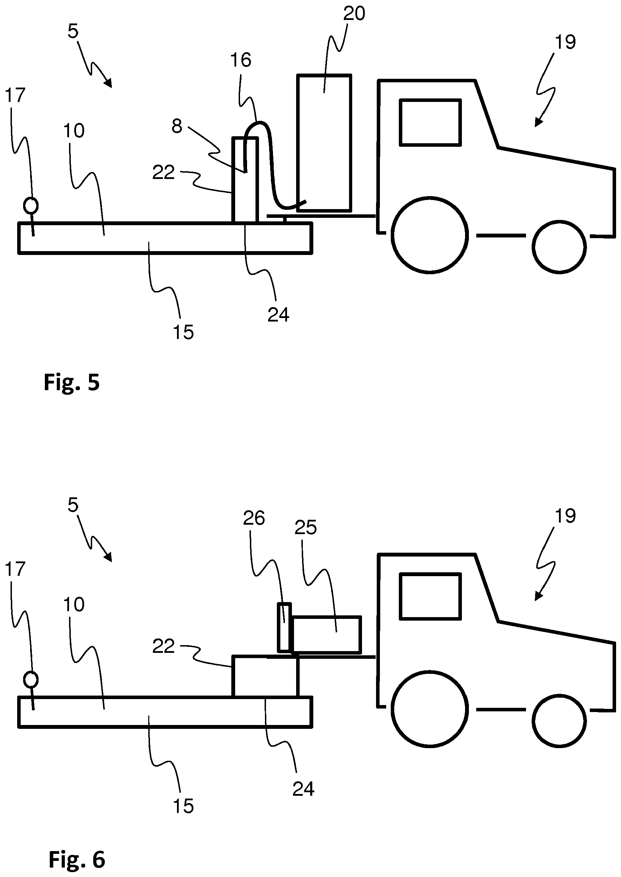

Fig. 5 displays schematically an example of a device 5 for removing at least one flower of a plant being coupled to a motor vehicle 19. The device 5 can have a cover 10 in the shape of a cowling 15. The device 5 comprises a temperature sensor 17 for measuring the temperature inside the least partially confined treatment space 4 for controlling the temperature with respect to the pre-determined treatment temperature. A cryogenic agent like a cryogenic fluid 6 or a cryogenic gas 7 is in use introduced to create a cold atmosphere 3 inside the treatment space 4 confined by the cover 10 in the shape of a cowling 15. The cryogenic agent is stored in a tank 20 coupled to the motor vehicle 19. A delivery line 16 is connected to the tank 20. The delivery line 16 can end inside the duct 22 with a discharging means 8 for discharging the cryogenic agent like the cryogenic gas 7 or the cryogenic fluid 6 inside the duct 22. At least one orifice 24 can be arranged in the cover 10. Therefore, the cryogenic gas 7 or the cryogenic fluid 6 being stored in the duct 22 can enter the treatment space 4 through the at least one orifice 24.

It is clear that each of the examples of devices 5 described above can be coupled to the motor vehicle 19 and the tank 20.

Fig. 6 displays schematically a device 5 for removing at least one flower of a plant coupled to a motor vehicle 19. The cold atmosphere 3 inside the treatment space 4, which treatment space 4 is at least partially confined by the cover 10 in the shape of a cowling 15, can be created using solid carbon dioxide 25. The solid carbon dioxide 25 is in use cut or crushed using cutting means 26. The cutting means 26 are arranged in the vicinity of the solid carbon dioxide 25 and the cutting means 26 is mounted to the motor vehicle 19. The crushed solid carbon dioxide 25 is introduced into duct 22, for example by gravitational movements when the cutting means 26 is arranged above the duct 22. The solid carbon dioxide 25 is used to create the cold atmosphere 3 which can enter the treatment space 4 through at least one orifice 24.

The pre-determined treatment time is the duration of exposure of the at least one flower 1 to the cold atmosphere 3. The cold atmosphere is provided in the at least partially confined treatment space 4 being confined by the cover 15. The cowling 15 is coupled to a motor vehicle 19, for example a tractor or another towing vehicle. The cowling 15 is pulled over the plant 2 by the motor vehicle 19.

There can also be a row of plants 2 each having at least one flower 1 and the cowling 15 with the cold atmosphere 3 inside is pulled over the plants in a direction along the row of plants 2. In this case it is preferred that the cover 10 is open in the direction of the towing. The pre-determined treatment time also depends on the size of the cover 15 and the velocity of the motor vehicle 19.

With the technical teaching of the present invention it is possible to effectively remove at least one flower of a plant without damage to the environment and without high personnel costs.

### Reference numerals

- 1: flower
- 2: plant
- 3: cold atmosphere
- 4: treatment space
- 5: device
- 6: cryogenic fluid
- 7: cryogenic gas
- 8: discharging means
- 9: nozzle
- 10: cover
- 11: inner surface
- 12: outer surface
- 13: open side
- 14: inlet opening
- 15: cowling
- 16: delivery line
- 17: temperature sensor
- 18: cutting means
- 19: motor vehicle
- 20: tank
- 21: distributor
- 22: duct
- 23: deflector
- 24: orifice
- 25: solid carbon dioxide
- 26: cutting means

## Claims

1. Method for removing at least one flower (1) of a plant (2), wherein the flower (1) is exposed to a cold atmosphere (3) with a temperature below a pre-determined treatment temperature for at least a pre-determined treatment time.

2. Method according to claim 1, wherein the cold atmosphere (3) is provided in an at least partially confined treatment space (4).

3. Method according to claim 1 or 2, wherein the cold atmosphere (3) is generated using at least one cryogenic gas (7).

4. Method according to claim 2 or 3, wherein the cold atmosphere (3) is generated by injecting a cryogenic fluid (6) into the treatment space (4).

5. Method according to claim 4, wherein the cryogenic fluid (6) is indirectly injected into the treatment space (4) without direct contact with the flower (1).

6. Method according to one of claims 3 to 5, wherein the cryogenic fluid (6) comprises at least one of the following
- liquid nitrogen and
- carbon dioxide.

7. Method according to claim 1 or 2, wherein the cold atmosphere (3) is generated using solid carbon dioxide (25).

## Patentansprüche

1. Verfahren zum Entfernen mindestens einer Blüte (1) einer Pflanze (2), wobei die Blüte (1) einer kalten Atmosphäre (3) mit einer Temperatur unter einer vorbestimmten Behandlungstemperatur für mindestens eine vorbestimmte Behandlungszeit ausgesetzt wird.

2. Verfahren nach Anspruch 1, wobei die kalte Atmosphäre (3) in einem mindestens teilweise geschlossenen Behandlungsraum (4) bereitgestellt ist.

3. Verfahren nach Anspruch 1 oder 2, wobei die kalte Atmosphäre (3) unter Verwenden mindestens eines kryogenen Gases (7) erzeugt wird.

4. Verfahren nach Anspruch 2 oder 3, wobei die kalte Atmosphäre (3) durch Einspritzen eines kryogenen Fluids (6) in den Behandlungsraum (4) erzeugt wird.

5. Verfahren nach Anspruch 4, wobei das kryogene Fluid (6) indirekt in den Behandlungsraum (4) ohne direkten Kontakt mit der Blume (1) eingespritzt wird.

6. Verfahren nach einem der Ansprüche 3 bis 5, wobei das kryogene Fluid (6) mindestens eines der Folgenden umfasst
- flüssigen Stickstoff und
- Kohlendioxid.

7. Verfahren nach Anspruch 1 oder 2, wobei die kalte Atmosphäre (3) unter Verwenden von festem Kohlendioxid (25) erzeugt wird.

## Revendications

1. Procédé pour enlever au moins une fleur (1) d'une plante (2), dans lequel la fleur (1) est exposée à une atmosphère froide (3) avec une température inférieure à une température de traitement prédéterminée pour au moins une durée de traitement prédéterminée.

2. Procédé selon la revendication 1, dans lequel l'atmosphère froide (3) est fournie dans un espace de traitement (4) au moins partiellement restreint.

3. Procédé selon la revendication 1 ou 2, dans lequel l'atmosphère froide (3) est générée en utilisant au moins un gaz cryogénique (7).

4. Procédé selon la revendication 2 ou 3, dans lequel l'atmosphère froide (3) est générée en injectant un fluide cryogénique (6) dans l'espace de traitement (4).

5. Procédé selon la revendication 4, dans lequel le fluide cryogénique (6) est injecté indirectement dans l'espace de traitement (4) sans contact direct avec la fleur (1).

6. Procédé selon l'une quelconque des revendications 3 à 5, dans lequel le fluide cryogénique (6) comprend au moins l'un parmi les suivants
- azote liquide et
- dioxyde de carbone.

7. Procédé selon la revendication 1 ou 2, dans lequel l'atmosphère froide (3) est générée en utilisant du dioxyde de carbone solide (25).
